# FASCICULE DE BREVET EUROPEEN

(11) **EP 2 611 060 B1**
(45) Date de publication et mention de la délivrance du brevet: **04.07.2018**
(21) Numéro de dépôt: 12199673.0
(22) Date de dépôt: 28.12.2012
(51) Int. Cl.: H04L 9/08

(54) **Procédé pour sécuriser des communications utilisant un vecteur d'initialisation sans connaissance de l'heure**
Verfahren zur Sicherung von Kommunikationen, die einen Initialisierungsvektor ohne Kenntnis der Uhrzeit verwenden
Method for securing communications using an initialisation vector without knowledge of the time

(30) Priorité: 29.12.2011 FR 1104129
(43) Date de publication de la demande: 03.07.2013
(73) Titulaire: Thales, 92400 Courbevoie (FR)
(72) Inventeur: Bruas, Patrick, 922300 GENNEVILLIERS (FR)
(74) Mandataire: Dudouit, Isabelle

(56) Documents cités:
- EP-A1- 0 073 323
- EP-A1- 1 251 643
- GB-A- 2 186 158
- Chairman Of The Joint Chiefs Of Staff Manual: "LINK 16 JOINT KEY MANAGEMENT PLAN", , 9 décembre 2011 (2011-12-09), XP055048039, Extrait de l'Internet: URL:http://www.dtic.mil/cjcs_directives/cd ata/unlimit/m652001.pdf [extrait le 2012-12-17]
- Joe Sorroche: "10th International Command and Control Research and Technology Symposium The Future of C2 Paper 41", Tactical Digital Information Link-Technical Advice and Lexicon for Enabling Simulation (TADIL-TALES), 1 janvier 2005 (2005-01-01), XP055048216, Extrait de l'Internet: URL:http://www.dtic.mil/cgi-bin/GetTRDoc?A D=ADA461555 [extrait le 2012-12-18]

## Description

L'invention concerne un procédé permettant de protéger ou sécuriser des communications en utilisant un vecteur d'initialisation sans utiliser la connaissance de l'heure en fonctionnement normal du procédé.

Elle s'applique, par exemple pour toutes les communications protégées quel que soit le type d'étalement de spectre utilisé.

Le procédé est notamment utilisé dans le domaine des télécommunications par satellite.

Dans le domaine élargi des communications radio protégées, le récepteur doit synchroniser son code d'étalement sur celui de l'émetteur, de manière à recevoir le trafic et si possible de manière passive, c'est-à-dire sans nécessairement émettre de signalisation sur la voie radio.

Le « code d'étalement » utilisé est une loi pseudo-aléatoire obtenue grâce à un générateur de code qui est initialisé avec une Clé cryptographique et un vecteur d'initialisation appelé aussi « marquant ». L'émetteur et le récepteur partagent la même clé. Dans le cas où le vecteur d'initialisation n'est pas transmis par la voie radio, le vecteur d'initialisation est appelé « vecteur d'initialisation implicite ». Dans le cas contraire ce « vecteur d'initialisation » est transmis sur une voie radio, dans une procédure dite « dégradée » et le vecteur est appelé « vecteur d'initialisation explicite ».

Dans les procédés connus de l'art antérieur, le « vecteur d'initialisation » est incrémenté régulièrement sur une base de temps formée d'une suite d'intervalles temporels consécutifs et de même durée. Dans l'état de l'art, le vecteur initialisation est renseigné avec une information « d'Heure » et l'incrémentation du vecteur d'initialisation se fait à chaque intervalle temporel de ladite suite, sachant qu'un intervalle temporel correspond à un ensemble de paliers EVF (Evasion de Fréquence) en commençant à une origine des temps T₀ choisie par la convention connue de l'Homme du métier.

On utilise alors l'heure pour numéroter les valeurs de vecteur d'initialisation. Par exemple, en technique d'évasion de fréquence ou EVF, les changements de contexte correspondant à un nouveau tirage de nombre pseudo-aléatoire servant à sélectionner la fréquence de saut se font à chaque intervalle de temps appelé « intervalle de tirage pseudo-aléatoire » Itpa. Ainsi, le vecteur d'initialisation, est incrémenté de 1 à chaque intervalle Itpa. L'échelle de numérotation des vecteurs d'initialisation commence à une date T₀ par convention du réseau de communications. L'émetteur du trafic parcourt une loi de saut rapide dans le plan Temps/Fréquence.

Chaque abonné du réseau a besoin de posséder une source horaire, par exemple, un récepteur GPS (Global Positionning System), une horloge atomique, une heure montre GMT, etc. de manière générique un moyen indiquant l'heure de manière fiable, stable et précise, ceci afin de connaître l'heure avec une certaine précision horaire connue ΔT par rapport à une « heure de référence réseau », c'est-à-dire, soit l'heure du maître de l'heure dans le réseau, soit une échelle de temps standard telle que le Temps Universel Coordonné ou TUC ou en abréviation anglo-saxonne UTC ou encore l'échelle de temps continu utilisé en interne par le GPS donc sans les secondes intercalaires du TUC. Meilleure est la précision, plus court est le temps de rentrée dans le réseau.

Lorsqu'une station du réseau ne possède pas l'heure, il faut distribuer l'heure à la station qui en est dépourvue, ce qui conduit à une dégradation de la qualité des procédures d'acquisition d'heure par voie radio. Pour cela, les procédés connus de l'art antérieur font appel à une balise horaire à protection réduite, par exemple avec une loi périodique ou une loi lente à base d'intervalle de validité de code ou CVI, ou encore à une procédure dans laquelle la station qui rentre doit faire une demande d'heure par voie radio, ce qui oblige la station à émettre.

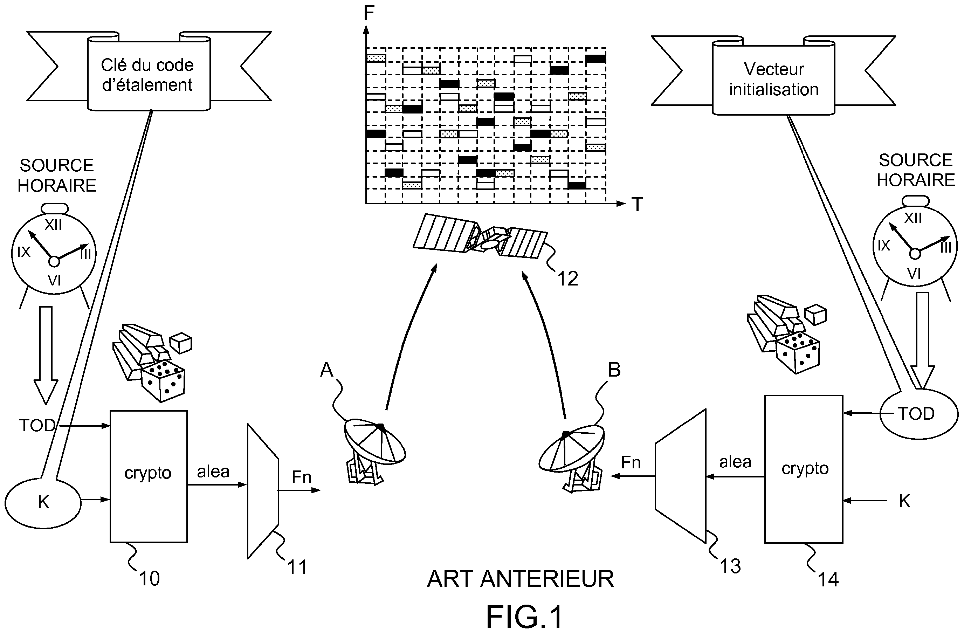

La figure 1 représente un exemple de mise en oeuvre des procédés selon l'art antérieur. Un terminal A est dans un état d'émission. Le terminal A comprend une clé et une source horaire 10, à partir de laquelle est produit un vecteur d'initialisation VI servant à générer, à l'aide de la clé K, un code d'étalement dans le plan temps-fréquence. La clé et le vecteur d'initialisation sont fournis à un module de tirage de nombre pseudo-aléatoire qui sert à sélectionner la fréquence de saut qui va être appliquée 11 à la communication à transmettre. La communication sécurisée arrive sur le récepteur du terminal B dans un état de réception, le récepteur va désétaler la communication en utilisant le même code d'étalement à base du même vecteur d'initialisation VI, de la même clé K et du même module de tirage de nombre pseudo-aléatoire.

Pour renseigner avec une valeur adéquate ledit vecteur d'initialisation du récepteur du terminal B, les procédés connus de l'art antérieur font appel à une source horaire qui est soit locale soit acquise par voie radio.

Dans certaines applications, la source horaire locale n'est pas fiable à 100%. L'inconvénient d'une source horaire acquise par voie radio est d'utiliser une méthode soit active qui aura donc une signature électromagnétique, soit passive en dégradant la qualité ECCM du signal à évasion de fréquence.

L'enseignement technique intitulé «Chairman of the Joint Chiefs of Staff Manual »: "LINK 16 JOINT KEY MANAGEMENT PLAN, 9 décembre 2011(2011-1 2-09), XP055048039, Extrait de Internet: URL:http://www.dtic.mil!cjcs_directives/cdatalunhimit!m652001 .pdf [extrait le 2012-12-17] concerne un procédé pour la protection de données, COMSE-Cet la sécurisation des données.

Le brevet GB 2 186 158 décrit un procédé de chiffrement de données, et ne dit rien en ce qui concerne la protection d'une transmission de données.

L'idée de la présente demande de brevet consiste à s'affranchir complètement de la connaissance de l'heure dans le cadre d'un fonctionnement normal du procédé et du système selon l'invention.

Dans la suite de la description on utilise l'expression « grandeur mesurable » au sens des mathématiques ou de la physique.
Une grandeur peut être dite mesurable ou non mesurable. La mesure exprime la grandeur d'un objet mesurable de manière à rendre cette grandeur comparable à d'autres grandeurs de même nature.
Le concept de *grandeur* est utilisé en mathématique pour désigner des notions associées à divers phénomènes tels que la longueur, les aires, les volumes, les masses, les angles, les vitesses, les durées, les vecteurs, les distributions de données statistiques ou aléatoires, etc.

L'invention concerne un procédé pour sécuriser les communications dans un réseau comprenant au moins un terminal émetteur A et un terminal récepteur B, caractérisé en ce qu'il comporte en combinaison au moins les étapes suivantes :
1) déterminer une grandeur mesurable répondant à une loi physique ou naturelle périodique immuable sur la durée de la sécurisation des communications au niveau de l'émetteur A et du récepteur B,
2) normaliser et quantifier ladite grandeur déterminée,
3) initialiser un vecteur d'initialisation avec ladite grandeur normalisée et quantifiée,
4) utiliser ledit vecteur d'initialisation avec une clé cryptographique pour générer par tirage aléatoire d'un ensemble de fréquences consécutives à utiliser pour sécuriser lesdites communications entre l'émetteur A et le récepteur B,
5) incrémenter le vecteur d'initialisation d'une valeur donnée à chaque intervalle de temps Itpa de tirage pseudo-aléatoire pour générer un ensemble de valeurs de fréquences consécutives.

Le terminal récepteur réalise, par exemple, une recherche de synchronisation avec une loi de veille dont la durée du palier de veille est basée sur la durée de l'intervalle de temps Itpa.

Le procédé peut utiliser comme valeur mesurable une loi de la mécanique classique de variation de distance d'un satellite géostationnaire incliné par rapport à toute station située à une latitude non nulle.

La grandeur mesurable suit, par exemple, une loi sinusoïdale ou selon une série de Fourier.

D'autres caractéristiques et avantages du dispositif selon l'invention apparaîtront mieux à la lecture de la description qui suit d'un exemple de réalisation donné à titre illustratif et nullement limitatif annexé des figures qui représentent :
- La figure 1, un schéma représentant les principes de protection des communications selon l'art antérieur,
- La figure 2, un exemple d'architecture de système de communications protégées selon l'invention,
- La figure 3, la représentation d'une loi de veille de type Evasion de fréquence ou EVF, dans un diagramme où l'axe des abscisses correspond au vecteur d'initialisation VI,
- La figure 4, un exemple de grandeur mesurable utilisée comme vecteur d'initialisation.

Afin de mieux faire comprendre le principe mis en oeuvre par l'invention, l'exemple qui suit est donné à titre illustratif et nullement limitatif.

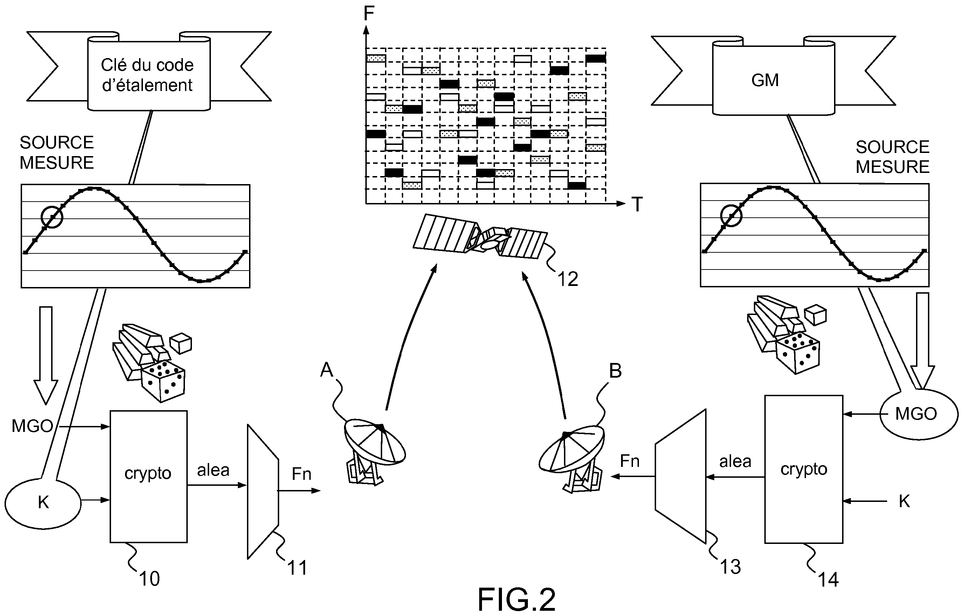

La figure 2 reprend le schéma de la figure 1 d'un réseau de communication où seule la façon de protéger la communication change. C'est-à-dire que l'on va utiliser un compteur « grandeur mesurable » MGO.

Afin d'établir la loi de saut de fréquence utilisée pour protéger les communications, le procédé va déterminer une grandeur observée mesurable GM ou calculable par tout membre du réseau ou par toute station faisant partie du réseau.

Le MGO est par exemple initialisé avec une valeur mesurée d'une grandeur observable indépendamment par tous les membres du réseau et à n'importe quel instant. Cette grandeur mesurée, après normalisation, est homogène dans l'espace et variable dans le temps selon une loi connue.

Le MGO est ensuite incrémenté de 1 à chaque intervalle de temps correspondant à la durée d'un ensemble de paliers EVF *(« TRANSEC »).* L'intervalle Itpa correspond à l'intervalle de tirage pseudo-aléatoire.

On définit la durée d'Intervalle de Tirage de nombre Pseudo-Aléatoire (Itpa) qui est commune à tout le réseau, par exemple, de la manière suivante : Itpa égale la valeur maximum requise du ratio Précision / Pente en unité seconde avec :
- Précision = celle de la mesure de la grandeur mesurée en unité mètre
- Pente = dérivée temporelle linéarisée de la grandeur mesurée en unité m/s.

La station qui atteint la précision requise de mesure de GM fera une recherche de synchronisation avec une Loi de veille dont la durée du palier de veille est égale à Itpa. La station qui a un plus petit ratio (respectivement plus grand) "précision/pente" pourra utiliser une loi de veille plus rapide (respectivement plus lente).

La grandeur mesurable et mesurée est, par exemple, une grandeur qui répond à une loi physique ou naturelle périodique et immuable sur la durée de la sécurisation des communications. Par exemple, une grandeur mesurée peut suivre une loi sinusoïdale ou toute série de Fourier. La connaissance de ladite loi et de sa période sont nécessaires pour mettre en oeuvre le procédé selon l'invention.

Le procédé selon l'invention exécute, par exemple, les étapes suivantes :
- la station émettrice ou réceptrice fait une mesure d'une grandeur observable à un instant t quelconque, pour cela elle utilise un dispositif de mesure adapté,
- les deux stations vont déterminer indépendamment un vecteur d'initialisation VI avec la grandeur mesurée GM après avoir normalisé et quantifié cette valeur. La normalisation du vecteur d'initialisation permet notamment d'uniformiser les informations vues par toutes les stations du réseau de communication. La quantification de la grandeur mesurable permet de calculer la valeur discrète du vecteur d'initialisation,
- les stations émettrice et réceptrice sont équipées d'un moyen approprié qui utilise une base de temps autonome en comptant les intervalles de temps appelés « intervalle de tirage pseudo-aléatoire » Itpa, depuis l'instant t quelconque correspondant à la mesure de la grandeur observable. La station va incrémenter le vecteur d'initialisation de 1 à chaque intervalle, en utilisant un compteur. Le calcul des intervalles est par exemple entretenu avec un pilote interne à la station ou au modem.

La normalisation de la Grandeur Mesurée (GM) consiste, par exemple, à la recadrer dans le domaine de valeur [-1; +1] en divisant la Grandeur mesurée GM par l'amplitude notée "a" qui est connue, car la latitude de la station est connue et l'inclinaison d'orbite aussi.

La pente linéarisée vaut : Pente = a * ω avec la pulsation angulaire w = 2 π/ T avec T = 23h56'04" la période sidérale.

Dans le cas d'un compteur composé de plusieurs sous-compteurs, par exemple 4 sous-compteurs cascadés dans l'exemple donné ci-après, le sous-compteur noté cp2 est, par exemple, quantifiée de la manière décrite ci-après.

On définit aussi au niveau du réseau un intervalle de temps Itpa correspondant à l'incrémentation de 1 du sous-compteur cp2 avec Itpa = ratio maximum requis de Précision de la mesure de la grandeur / Pente. Par exemple, si toutes les stations ont un ratio ≤ 10 s selon leur dispersion géographique et leur moyen de mesure de GM, alors on prend Itpa = 10 s.

On définit au niveau de chaque station du réseau, un quantum q = Itpa * a * ω. Après la mesure de la Grandeur (par exemple, la distance Station-Satellite) Mesurable de valeur GM, chaque station initialise son sous-compteur cp2 avec la valeur suivante : cp2 = GM / q. Cette opération permet à la fois la normalisation (division par « a ») et la quantification de la Grandeur.

Cette valeur quantum correspondrait à 200 mètres pour une station qui verrait le satellite avec une vitesse de 20 m/s avec Itpa= 10 s.

La station émettrice en état d'émission suit une première loi de visite des fréquences L_{A} (appelée aussi loi L₁ qui correspond à la vitesse de saut maximum). La station de réception en état de recherche de synchronisation suit une loi L_{B} de veille des fréquences. Le principe des lois de veille s'applique au vecteur d'initialisation VI. Les stations présentent vont se synchroniser pendant les transmissions afin de changer de fréquence à l'unisson. La loi L_{B} est un sous-échantillonnage de la loi L_{A} (appelée aussi loi L₁), dont l'ordre est fonction de la précision de mesure, de la durée de l'intervalle Itpa de tirage pseudo-aléatoire et de la dérivée temporelle qui régit la grandeur mesurée.

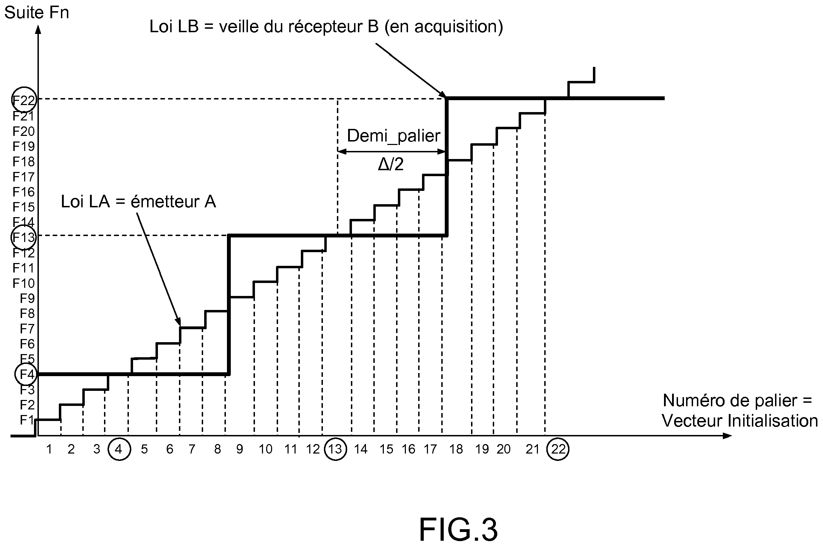

La figure 3, représente une loi de veille de type Evasion de fréquence ou EVF, dans un diagramme où l'axe des abscisses correspond au vecteur d'initialisation VI, Selon l'art antérieur, l'axe des abscisses est le numéro de l'intervalle temporel dont la suite est numérotée sur une échelle de temps et la durée du demi-palier de veille vaut Δ/2 avec Δ/2=l'incertitude horaire. Dans le cas de la présente invention, le VI est le numéro d'intervalle de quantification de GM dont la suite est numérotée sur une échelle de grandeur mesurée, sur cette figure la durée du demi-pallier de veille vaut Δ/2 avec Δ/2 égal au rapport de la demi-précision de mesure de la grandeur sur la pente.

Le compteur utilisé pour incrémenter le vecteur d'initialisation est par exemple un compteur composé de quatre sous-compteurs cascadés. En allant du poids fort vers le poids faible, le premier sous-compteur peut contenir le numéro de la période sidérale, le deuxième sous-compteur le sens de variation de la grandeur mesurée, le troisième sous-compteur est initialisé avec la valeur normalisée et quantifiée de la mesure, le quatrième sous-compteur est par exemple renseigné par le numéro de palier à l'intérieur d'un intervalle temporel fixé dont la durée correspond à celle d'un palier de la loi de veille du récepteur.

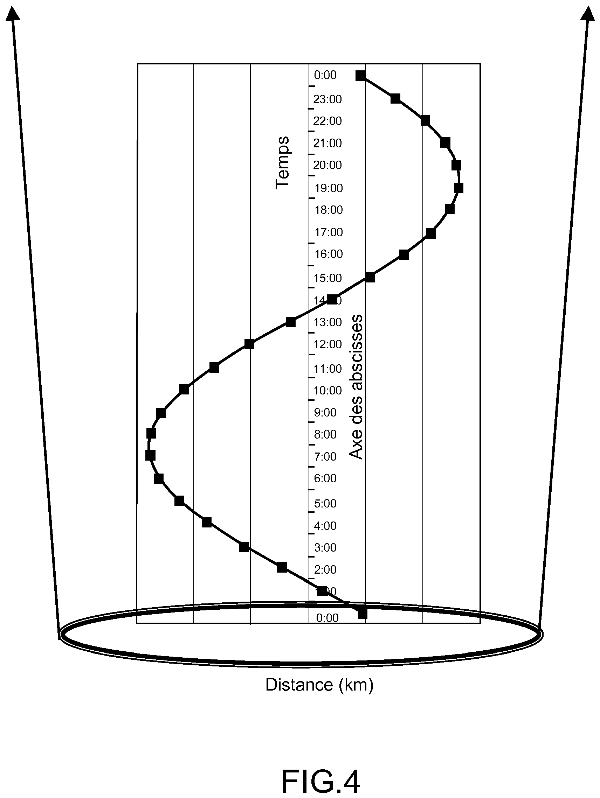

La figure 4 représente un exemple d'application du procédé selon l'invention dans les communications satellitaires SATCOM.

Le mouvement du satellite en orbite suit une orbite képlérienne, ellipse osculatrice à la vraie trajectoire, dont les paramètres ou éphémérides sont connus.

Un terminal satellite terrestre peut utiliser une forme d'onde discrète très étalée pour faire une mesure précise de la distance station-satellite ou de son temps de transit TT en connexité simple.
✔ Un exemple chiffré pour cet exemple de réalisation est donné à titre d'exemple ;Une excursion de ± a=270 km (respectivement 27 km) en 1 période sidérale donne une pente linéarisée aω d'environ 20 m/s (respectivement 2 m/s) de la grandeur D avec w la pulsation angulaire de la loi sinusoïdale de période T telle que ω=2π/T. Si la précision de la mesure est 200 m (respectivement 20 m) et l'intervalle Itpa de 10 secondes [ou 1 sec] Connaissant p la vitesse de saut (sauts par seconde) pour le saut de fréquence, alors une Loi de veille L_{10*p} (ou L_{1*p} ) peut être utilisée pour la synchronisation le Temps d'Acquisition est de 10 s (ou 1 s) hors mesure de D. Le compteur cascadé de la grandeur mesurable MGO comprend du poids faible vers fort:
✔ cp1 compte le # sauts par quantum
✔ cp2 compte le nombre de quanta contenu dans GM
✔ cp3 compte de 1 à 2 selon le sens de la pente
✔ cp4 compte le n° de la période sidérale T=23h56'4sec

L'exemple qui suit est un exemple numérique donné à titre illustratif.

Une station A à moyenne latitude qui voit le satellite incliné à 3° avec une amplitude a = 270 km a besoin d'une Précision de mesure de 200 m pour pouvoir utiliser la loi de veille de durée palier 10s.

Si sa précision est meilleure, elle doit respecter le compteur cp2 incrémenté de 1 tous les intervalles Itpa, mais sa loi de veille sera plus rapide, donc son temps d'acquisition du trafic plus rapide.

Une station B à basse latitude qui voit le même satellite incliné avec une amplitude a = 27 km a besoin d'une Précision de mesure de 20 m pour pouvoir utiliser la loi de veille de durée palier 10s.

Si sa précision est moins bonne, elle doit respecter le compteur cp2 incrémenté de 1 tous les Itpa, mais sa loi de veille sera plus lente, donc son temps d'acquisition du trafic plus lent.

Les stations A et B tirent les mêmes aléas au même instant en initialisant leur marquant MGO avec la même valeur.

En prenant la sinusoïde par exemple à la moitié de sa valeur soit +135 km pour la station A et +13,5 km pour la station B.
Le quantum de A vaut q(A) = 200 m. Le quantum de B vaut q(B) = 20 m.

Pour les 2 stations A et B, la valeur normalisée et quantifiée du sous-compteur cp2 donne le même résultat 135/0,2= 675
Pour la loi de veille de 10 s, la valeur du premier sous-compteur cp1 est nulle. Les valeurs du troisième sous-compteur cp3 et du quatrième sous-compteur cp4 sont identiques pour A et B.

Le sous-compteur cp2 est incrémenté de 1 sur une base de temps Itpa = 10 s défini dans le réseau.

Donc, les stations A et B tirent les mêmes aléas.

Supposons maintenant que la station A rentre la première puis que la station B rentre 10 minutes plus tard.

La station A a initialisé son MGO avec cp2 = 675 selon la procédure ci-dessus. On suppose que son TT varie de 20 m/s. Au bout de 10' son TT vaut 135 km + 20*600m = 147 km. Son cp2 vaut 675 + 600/ltpa = 735. La valeur normalisée quantifiée aurait été de 147/0,2=735.

La station B a un TT qui varie de 2 m/s. Au bout de 10' son TT vaut 13,5 km + 2*600m = 14,7 km. Son cp2 vaut la valeur normalisée quantifiée 14,7/0,02=735.

Le procédé selon l'invention offre notamment les avantages suivants : une indépendance par rapport à toute source horaire, une indépendance vis-à-vis du GPS en particulier, le fait de ne pas utiliser d'émission non-ECCM ou ECCM dégradée qui rendrait la station vulnérable, la discrétion par émission d'une forme d'onde étalement de spectre par séquence directe ou PN, par exemple pour la mesure de distance ultra-précise du satellite.

Il n'est pas nécessaire de transmettre par voie radio le vecteur d'initialisation.

## Revendications

1. Procédé pour sécuriser les communications dans un réseau comprenant au moins un terminal émetteur A et un terminal récepteur B, **caractérisé en ce qu'**il comporte en combinaison au moins les étapes suivantes :
1) déterminer une grandeur mesurable répondant à une loi physique ou naturelle périodique et immuable sur la durée de la sécurisation des communications au niveau de l'émetteur A et du récepteur B,
2) normaliser et quantifier ladite grandeur déterminée,
3) initialiser un vecteur d'initialisation avec ladite grandeur normalisée et quantifiée,
4) utiliser ledit vecteur d'initialisation avec une clé cryptographique pour générer par tirage aléatoire d'un ensemble de fréquences consécutives à utiliser pour sécuriser lesdites communications entre l'émetteur A et le récepteur B,
5) incrémenter le vecteur d'initialisation d'une valeur donnée à chaque intervalle de temps Itpa de tirage pseudo-aléatoire pour générer un ensemble de valeurs de fréquences consécutives.

2. Procédé selon la revendication 1 **caractérisé en ce que** le terminal récepteur réalise une recherche de synchronisation avec une loi de veille dont la durée du palier de veille est basée sur la durée de l'intervalle de temps Itpa.

3. Procédé selon la revendication 1 **caractérisé en ce qu'**il utilise comme valeur mesurable une loi de la mécanique classique de variation de distance d'un satellite géostationnaire incliné par rapport à toute station située à une latitude non nulle.

4. Procédé selon la revendication 1 **caractérisé en ce que** la grandeur mesurable suit une loi sinusoïdale.

5. Procédé selon la revendication 1 **caractérisé en ce que** la grandeur mesurable suit une loi selon une série de Fourier.

## Patentansprüche

1. Verfahren zur Sicherung von Kommunikationen in einem Netzwerk, umfassend mindestens ein Sendeendgerät A und ein Empfangsendgerät B, **dadurch gekennzeichnet, dass** es in Kombination mindestens die folgenden Schritte aufweist:
1) Ermitteln einer messbaren Größe, die einem periodischen physikalischen oder natürlichen und über die Dauer der Sicherung der Kommunikationen des Senders A und des Empfängers B unveränderlichen Gesetz entspricht,
2) Standardisieren und Quantifizieren der ermittelten Größe,
3) Initialisieren eines Initialisierungsvektors mit der standardisierten und quantifizierten Größe,
4) Verwenden des Initialisierungsvektors mit einem kryptographischen Schlüssel, um durch Zufallsziehung eine Gesamtheit aufeinanderfolgender Frequenzen zu erzeugen, die zur Sicherung der Kommunikationen zwischen dem Sender A und dem Empfänger B verwendet werden,
5) Inkrementieren des Initialisierungsvektors um einen bestimmten Wert bei jedem Pseudozufallsziehung-Itpa-Zeitintervall, um eine Gesamtheit von aufeinanderfolgenden Frequenzwerten zu erzeugen.

2. Verfahren nach Anspruch 1, **dadurch gekennzeichnet, dass** das Empfangsendgerät eine Synchronisationssuche mit einem Standby-Gesetz durchführt, dessen Dauer der Standby-Phase auf der Dauer des Itpa-Zeitintervalls beruht.

3. Verfahren nach Anspruch 1, **dadurch gekennzeichnet, dass** es als messbaren Wert ein Gesetz der klassischen Mechanik der Abstandsänderung eines geostationären Satelliten verwendet, der bezüglich jeder auf einer geographischen Breite ungleich Null angeordneten Station geneigt ist.

4. Verfahren nach Anspruch 1, **dadurch gekennzeichnet, dass** die messbare Größe einem sinusförmigen Gesetz folgt.

5. Verfahren nach Anspruch 1, **dadurch gekennzeichnet, dass** die messbare Größe einem Gesetz gemäß einer Fourier-Reihe folgt.

## Claims

1. Method for securing communications in a network comprising at least one emitter terminal A and one receiver terminal B, **characterized in that** it comprises in combination at least the following steps:
1) defining a measurable quantity that obeys a periodic physical or natural law and that does not change over the duration of the securing of the communications that can be measured at the emitter A and the receiver B;
2) normalizing and quantifying said defined quantity;
3) initializing an initialization vector with said normalized and quantified quantity;
4) using said initialization vector with a cryptographic key to randomly generate a set of consecutive frequencies to use for securing said communications between the emitter A and the receiver B; and
5) incrementing the initialization vector by a given value after each pseudo-random generation time interval Itpa in order to generate a set of consecutive frequency values.

2. Method according to Claim 1, **characterized in that** the receiver terminal carries out a synchronization search using a wait function the duration of the wait stage of which is based on the duration of the time interval Itpa.

3. Method according to Claim 1, **characterized in that** it uses, as the measurable value, a function of the conventional mechanical variation in distance of a geostationary satellite inclined relative to any station located at a non-zero latitude.

4. Method according to Claim 1 **characterized in that** the measurable quantity obeys a sinusoidal law.

5. Method according to Claim 1 **characterized in that** the measurable quantity obeys a law according to a Fourier serie.
